# EUROPEAN PATENT APPLICATION

(11) **EP 4 450 570 A1**
(43) Date of publication of application: **23.10.2024**
(21) Application number: 23827374.2
(22) Date of filing: 11.05.2023
(51) Int. Cl.: C09D 5/16, C09D 5/24, C09D 7/61, C09D 7/65, C08J 7/04, C08K 3/04, C08L 101/00, C08L 91/06, F24F 13/20

(54) **EXTERIOR MATERIAL FOR HOME APPLIANCE AND AIR CONDITIONER INCLUDING SAME**

(30) Priority: 20.06.2022 KR 20220075201; 11.08.2022 KR 20220100956
(71) Applicant: Samsung Electronics Co., Ltd, Suwon-si, Gyeonggi-do 16677 (KR)
(72) Inventor: HONG, Jimin, Suwon-si Gyeonggi-do 16677 (KR); LIM, Jungsoo, Suwon-si Gyeonggi-do 16677 (KR); JEONG, Kihun, Suwon-si Gyeonggi-do 16677 (KR); KOH, Youngdeog, Suwon-si Gyeonggi-do 16677 (KR)
(74) Representative: Gulde & Partner
(86) International application number: PCT/KR2023/006402
(87) International publication number: WO 2023/249254

(57) **Abstract**

An exterior material for home appliances comprises a plastic material; and a coating layer formed on the top of the plastic material. The coating layer may comprise at least one of a wax-based additive, a fluorine-based additive, or a wax-based additive and a fluorine-based additive by applying a coating solution having a viscosity of 10 to 100 g/cm s that comprises the at least one additive.

## Description

### [Technical Field]

The present disclosure relates to an exterior material for home appliances and an air conditioner comprising the same.

### [Background Art]

With the recent increase in amounts of fine dust, operation time of air conditioning systems such as air conditioners and air purifiers is increasing. Thus, the issue of dust adhering to suction ports and discharge ports of air conditioners has been continuously raised.

While an air conditioner operates, dust floating in the air migrates into the air conditioner along a flow path formed by the air conditioner, the migrated air may adhere to the surface of a suction port causing contamination. In addition, since a filter of the air conditioner cannot completely filter fine dust, contamination may also be caused on the surface of a discharge port by dust that has not been filtered.

Also, once the suction port and the discharge port are contaminated, problems such as odor generation, outbreak of respiratory disease, and marring the appearance may be caused.

### [Disclosure]

### [Technical Problem]

To solve various problems including the above problems, provided are an exterior material for home appliances having improved dust resistance by forming a coating layer on the surface and an air conditioner including the same.

### [Technical Solution]

In accordance with an aspect of the present disclosure, an exterior material for a home appliance. The exterior material comprises a plastic material; and a coating layer formed on the top of the plastic material. The coating layer may comprise at least one additive from among a wax-based additive, a fluorine-based additive, or the wax-based additive and the fluorine-based additive by applying a coating solution having a viscosity of 10 to 100 g/cm s that comprises the at least one additive.

In accordance with another aspect of the present disclosure, an air conditioner includes a main body provided with a suction port and a discharge port; a motor driver including a motor; and a controller configured to control the motor driver. The main body may comprise an exterior material. The exterior material may comprise: a plastic material; and a coating layer formed on the top of the plastic material. The coating layer may comprise at least one additive from among a wax-based additive, a fluorine-based additive, or the wax-based additive and the fluorine-based additive by applying a coating solution having a viscosity of 10 to 100 g/cm s that comprises the additive.

### [Advantageous Effects]

According to one embodiment, an exterior material for home appliances having improved dust resistance by imparting slip properties by forming a coating layer on the surface and an air conditioner comprising the same may be provided.

However, the effects achieved by the exterior material for home appliances and the air conditioner comprising the same according to the embodiments of the present disclosure are not limited to those mentioned above, and any other effects not mentioned herein will be understood by those skilled in the art to which the present disclosure belong.

### [Description of Drawings]

FIG. 1 is an image showing a contaminated suction port of an air conditioner.
FIG. 2 is a graph showing distribution of GNTs and changes in electrical conductivity with respect to the GNT content.
FIG. 3 is a schematic diagram illustrating a conventional exterior material for home appliances.
FIG. 4 is a schematic diagram illustrating an exterior material for home appliances according to an embodiment.
FIG. 5 is a graph showing reduced amounts of static electricity with respect to charge mobility.
FIG. 6 is a schematic diagram illustrating an air conditioner according to an embodiment.
FIG. 7 is an image showing dust resistance test results of a conventional exterior material for home appliances.
FIG. 8 is an image showing dust resistance test results of an exterior material for home appliances according to an embodiment.

### [Modes of the Invention]

Hereinafter, embodiments of the present disclosure will be described in detail with reference to the accompanying drawings. These embodiments are provided to fully convey the concept of the present disclosure to those of ordinary skill in the art. The present disclosure may, however, be embodied in many different forms and should not be construed as limited to the exemplary embodiments set forth herein. In the drawings, parts unrelated to the descriptions are omitted for clear description of the disclosure and sizes of elements may be exaggerated for clarity.

Throughout the specification, the term "comprising" or "including" an element specifies the presence of the stated element, but does not preclude the presence or addition of one or more elements, unless otherwise stated.

An expression used in the singular encompasses the expression of the plural, unless otherwise indicated.

An exterior material for home appliances according to an embodiment comprises a plastic material; and a coating layer formed by applying a coating solution to the top of the plastic material. However, the material is not limited to the plastic material and any other materials may be applied according to the purpose thereof.

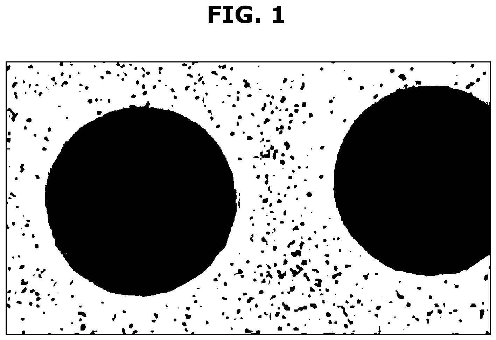

FIG. 1 is an image showing a contaminated suction port of an air conditioner.

Referring to FIG. 1, in the case of applying a conventional exterior material for home appliances, dust resistance deteriorates resulting in an increase in surface contamination. Therefore, in the present disclosure, dust resistance is improved by forming a coating layer on the top of a material by applying a coating solution having optimized components thereto.

The coating solution may comprise at least one of a wax-based additive and a fluorine-based additive to improve slip properties.

Because dust easily adheres to the surface of a material having a high surface energy and dust is difficult to fall off due to a high coefficient of friction, surface contamination may easily occur. For easy adhesion and separation of dust, it is necessary to lower the coefficient of friction by imparting slip properties to the surface.

The wax-based additive may improve dust resistance by lowering a surface roughness of the surface of a material and imparting slip properties thereto. A wax-based additive may be added in an amount of 2% or more to sufficiently impart slip properties. However, when the content of the wax-based additive exceeds 15%, it is difficult to further lower a coefficient of friction and production costs may increase. Thus, the wax-based additives may be added in an amount of 2 to 15%. Preferably, the wax-based additive may be added in an amount of 4 to 15%.

The wax-based additive may be in a powder form having a diameter of 5 to 100 µm and have a melting point of 120° C or lower.

The wax-based additive having a smaller diameter may have greater slip properties. However, a wax-based additive having a diameter of 100 µm or more may have increased surface roughness, resulting in deterioration of dust resistance.

The wax-based additive may have a melting point of 120°C or less. Therefore, in preparation of the coating solution, the wax-based additive may melt and be present in a liquid phase, thereby being uniformly coated on the surface of a material to impart slip properties thereto.

The fluorine-based additive may serve to improve dust resistance by lowering the surface energy of the material. The fluorine-based additive may be added in an amount of 2% or more to effectively lower the surface energy. However, an amount of the fluorine-based additive exceeding 15% may significantly decrease the effect on reducing the surface energy relative to the addition amount and manufacturing costs may increase. Therefore, the fluorine-based additive may be added in an amount of 2 to 15%. Preferably, the fluorine-based additive may be added in an amount of 4 to 15%.

The fluorine-based additive may be in a powder form having a diameter of 1 to 10 µm and may have a melting point of 300 to 400°C.

Like the wax-based additive, the fluorine-based additive having a smaller diameter may have greater effects on reducing the surface energy. However, the fluorine-based additive having a diameter of 10 µm or more may have increased surface roughness, resulting in deterioration of dust resistance.

The fluorine-based additive may have a melting point of 300 to 400°C. Therefore, the fluorine-based additive may be present in the powder form without melting in preparation of the coating solution and may be uniformly coated on the surface of a material to impart the effect on reducing the surface energy.

The wax-based additive and the fluorine-based additive may be added simultaneously. In the case of simultaneously adding the wax-based additive and the fluorine-based additive, the wax-based additive in a liquid phase and the fluorine-based additive in the powder form are uniformly coated on the surface of the material, resulting in further improvement of dust resistance.

The coating solution may further comprise graphene nanotubes (GNTs) to form a conductive network.

Static electricity may be generated by dust adhering to the surface of the exterior material, making it more difficult for dust to fall off. Accordingly, the generated static electricity may be effectively dispersed by forming the conductive network on the surface of the exterior material, and thus dust resistance may be improved.

The GNTs may be included in an amount of 0.001 to 3.0 wt%.

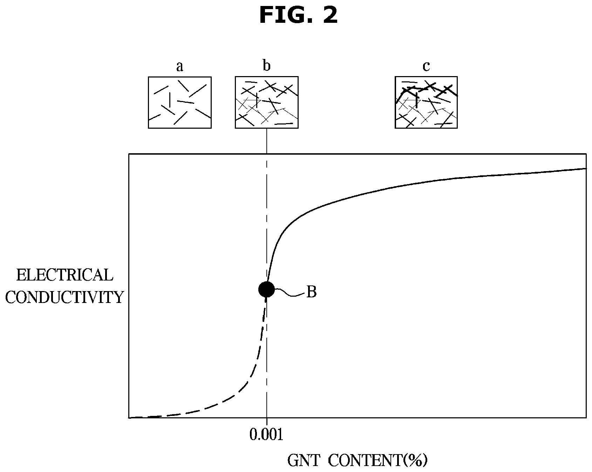

FIG. 2 is a graph showing distribution of GNTs and changes in electrical conductivity with respect to the GNT content.

Referring to FIG. 2, as the content of GNTs increases, electrical conductivity increases. Referring to b of FIG. 2, the GNT content at a percolation threshold may be 0.001% in the present disclosure. In this regard, the percolation threshold refers to a point where the conductive network is sufficiently formed. However, with the GNT content exceeding 3.0%, the increase rate of conductivity relative to the addition amount may significantly decrease. Therefore, the GNTs may be included in an amount of 0.001 to 3.0%. Preferably, the GNT content may be from 0.01 to 1.0%.

The content and shape of GNTs are closely related to transmittance of the exterior material.

Referring to a, b, and c of FIG. 2, the density of GNTs is low in the case where the GNT content is 0.001% or less. However, as the GNT content increases, the density of GNTs increases, resulting in a decrease in transmittance of the exterior material.

The shape of the GNT may be cylindrical. At an aspect ratio of the GNT of less than 1:1500, the transmittance of the exterior material may be less than 80%. Here, the aspect ratio means a diameter: length ratio.

In the case where a transmittance of 80% or more is required to implement a transparent exterior material, the GNT content may further be controlled to a range of 0.001 to 0.09%. In addition, in the case where the transmittance of the exterior material of 80% or more is required, the aspect ratio of the GNT may be 1:1500 or more.

The coating layer may have an edge tilt angle of 40 to 80 degrees.

The edge tilt angle of the coating layer is related to a force enabling detachment of the dust adhering thereto. With the edge tilt angle of the coating layer of 90 degrees, the force enabling detachment of the dust is applied in a direction perpendicular to the surface, but with a low edge tilt angle of the coating layer, the force enabling detachment of the dust may increase by the lowered angle. Therefore, by adjusting the edge tilt angle of the coating layer, the force enabling detachment of the dust may increase, thereby improving dust resistance.

The edge tilt angle of the coating layer may be obtained by adjusting a viscosity of the coating solution. As the viscosity of the coating solution increases, the edge tilt angle of the coating layer decreases. As the viscosity of the coating solution decreases, the edge tilt angle of the coating layer increases.

In the present disclosure, dust resistance is improved by lowering the edge tilt angle by adjusting the viscosity of the coating solution measured at 180°C in a range of 10 to 100 g/cm s.

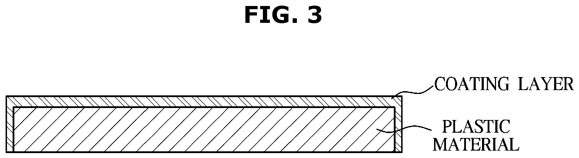

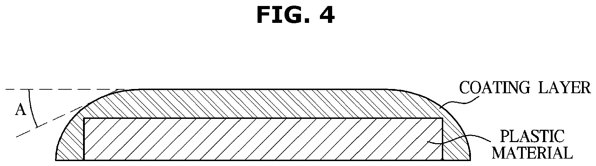

FIG. 3 is a schematic diagram illustrating a conventional exterior material for home appliances, and FIG. 4 is a schematic diagram illustrating an exterior material for home appliances according to an embodiment.

Referring to FIGS. 3 and 4, because a thin coating layer is formed on the conventional exterior material for home appliances, the edge tilt angle of the coating layer is approximately 90 degrees. However, in the exterior material for home appliances according to an embodiment of the present disclosure, a thick coating layer is formed by adjusting the viscosity of the coating solution so that the edge tilt angle (A) of the coating layer may be from 40 to 80 degrees.

The exterior material for home appliances according to an embodiment may have a coefficient of friction of 0.001 to 0.32 µ and a surface energy of 40 Dyne/cm or less by optimizing the components of the coating solution.

The exterior material for home appliances according to one embodiment may have a charge mobility of 50,000 to 200,000 cm²/V s.

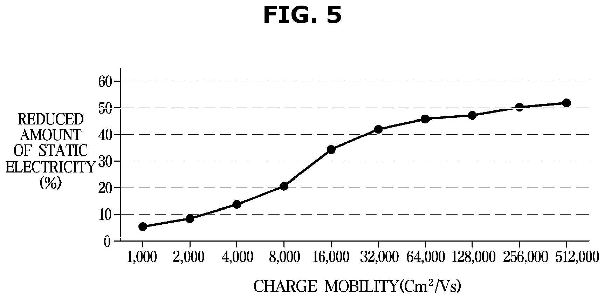

FIG. 5 is a graph showing reduced amounts of static electricity with respect to charge mobility.

Referring to FIG. 5, the reduced amount of static electricity may increase as the charge mobility increases. In the present disclosure, the charge mobility may be adjusted from 50,000 to 200,000 cm²/V s by sufficiently forming a conductive network by adding GNTs. Accordingly, static electricity on the surface of the exterior material is reduced, and dust adhered thereto may easily fall off.

Next, an air conditioner according to another aspect of the present disclosure will be described.

An air conditioner according to an embodiment may comprise a main body provided with a suction port and a discharge port; a motor driver comprising a motor; and a controller configured to control the motor driver. The main body may comprise an exterior material. The exterior material may comprise a plastic material; and a coating layer formed on the top of the plastic material by applying a coating solution thereto. The coating solution may comprise at least one of a wax-based additive and a fluorine-based additive to improve slip properties and may have a viscosity of 10 to 100 g/cm s.

The wax-based additive may be included in an amount of 2 to 15 wt%, and the fluorine-based additive may be included in an amount of 2 to 15 wt%.

The coating solution may further include graphene nanotubes (GNTs), and the GNTs may be included in an amount of 0.001 to 3.0 wt%.

The coating layer may have an edge tilt angle of 40 to 80 degrees, and the exterior material may have a coefficient of friction of 0.001 to 0.5 µ.

The exterior material is as described above and the air conditioner will be described in more detail hereinafter.

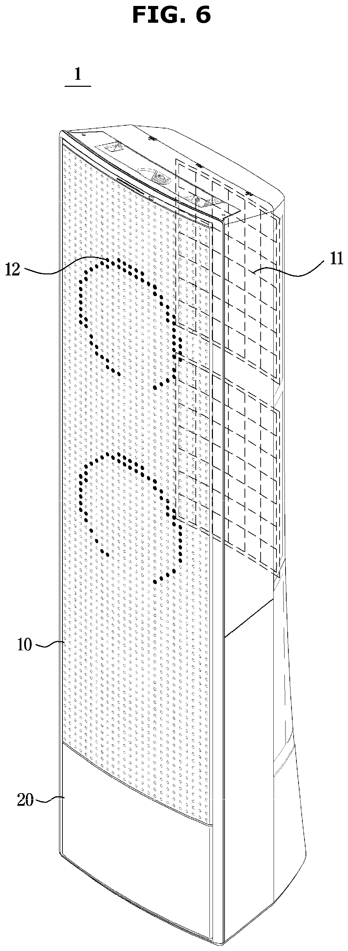

FIG. 6 is a schematic diagram illustrating an air conditioner according to an embodiment.

Referring to FIG. 6, an air conditioner 1 according to an embodiment may comprise a main body 10, a motor driver (not shown), and a controller (not shown).

The main body 10 has an approximate box-shape and may comprise a blower fan forcibly blowing air, a heat exchanger configured to perform heat exchange between sucked indoor air and a refrigerant, and a control device configured to control the operation of the air conditioner 1.

A suction port 11 to suck indoor air into the main body 10 and a discharge port 12 to discharge heat-exchanged air back into a room are provided on the rear side of the main body 10. The main body 10 may comprise a scroll device configured to guide air heat-exchanged while passing through the heat exchanger toward the discharge port 12 in one direction.

Air frequently flows in and out through the suction port 11 and the discharge port. Therefore, the main body 10 provided with the suction port 11 and the discharge port 12 may be easily exposed to contamination by dust. According to the present disclosure, the main body 10 comprises the exterior material for home appliance having improved dust resistance, and thus contamination by dust may be minimized.

The motor driver is driven by the control of the controller and comprises a first motor driver connected to an indoor unit and a second motor driver connected to an outdoor unit. In addition, each of the first motor driver and the second motor driver comprise a motor. In this regard, the motor controls a resistance value of a variable resistor. In response to a change in the resistance value of the variable resistor as the motor is driven, a voltage is generated. The voltage generated by driving the motor in this manner is input to the indoor unit and the outdoor unit.

The controller controls the motor driver based on a target temperature and controls the motor driver by sensing temperature calculated by the indoor unit and the outdoor unit by driving the motor driver and may be implemented as a CPU and a microcomputer.

Hereinafter, the present disclosure will be described in more detail with reference to the following examples and comparative examples. However, the following examples are merely presented to exemplify the contents and effects of the present disclosure, and the scope and effects of the present disclosure are not limited thereto.

### {Examples}

### <Dust Resistance Performance Test>

Tables 1 to 4 below show coefficients of friction and dust resistance performance with respect to components of the coating solution.

As the components of the coating solution, a wax-based additive having a powder size of 20 µm and a melting point of 100°C, a fluorine-based additive having a powder size of 2 µm and a melting point of 370°C, and GNT having an aspect ratio of 1:5000 were used.

The coefficients of friction were measured according to the ASTM G99 Pin on Disk method at room temperature using a coefficient of friction measurement device.

After preparing a sample of the exterior material having an area of 0. 1 m² and applying the sample to the main body of the air conditioner, the air conditioner was continuously driven in a chamber with a volume of 0.25 m³ and generating dust, and then an area fraction of dust adhering to the sample was measured using Expression (1) below. As the dust, 0.3 g of dust type 8 of the DMT test was introduced at a wind speed of 2 m/s.

Expression (1): ((area of perforated portion to which dust does not adhere) / (whole area of perforated portion)) * 100

In Expression (1), the perforated portion refers to a hole made in the suction port and the discharge port.

A higher dust resistance performance value may be determined to have better dust resistance.

**[Table 1]**

| Wax-based additive (wt%) | Coefficient of friction (µ) | Dust resistance (%) |
|---|---|---|
| 0 | 0.52 | 0 |
| 1 | 0.51 | 2 |
| 2 | 0.48 | 7 |
| 3 | 0.34 | 11 |
| 4 | 0.32 | 14 |
| 5 | 0.27 | 16 |
| 6 | 0.22 | 18 |
| 7 | 0.17 | 21 |
| 8 | 0.15 | 24 |
| 9 | 0.14 | 28 |
| 10 | 0.14 | 30 |
| 11 | 0.13 | 30 |
| 12 | 0.13 | 30 |
| 13 | 0.13 | 31 |
| 14 | 0.12 | 31 |
| 15 | 0.12 | 31 |

**[Table 2]**

| Fluorine-based additive (wt%) | Coefficient of friction (µ) | Dust resistance (%) |
|---|---|---|
| 0 | 0.52 | 0 |
| 1 | 0.40 | 9 |
| 2 | 0.28 | 16 |
| 3 | 0.21 | 18 |
| 4 | 0.18 | 20 |
| 5 | 0.16 | 24 |
| 6 | 0.14 | 28 |
| 7 | 0.11 | 32 |
| 8 | 0.08 | 37 |
| 9 | 0.05 | 40 |
| 10 | 0.04 | 43 |
| 11 | 0.04 | 43 |
| 12 | 0.03 | 43 |
| 13 | 0.03 | 43 |
| 14 | 0.03 | 43 |
| 15 | 0.02 | 50 |

**[Table 3]**

| Wax-based additive (wt%) | Fluorine-based additive (wt%) | Coefficient of friction (µ) | Dust resistance (%) |
|---|---|---|---|
| 0 | 0 | 0.52 | 0 |
| 1 | 1 | 0.30 | 20 |
| 2 | 2 | 0.20 | 29 |
| 3 | 3 | 0.10 | 41 |
| 4 | 4 | 0.05 | 60 |
| 5 | 5 | 0.03 | 68 |
| 6 | 6 | 0.02 | 75 |
| 7 | 7 | 0.02 | 79 |
| 8 | 8 | 0.02 | 82 |
| 9 | 9 | 0.02 | 82 |
| 10 | 10 | 0.02 | 78 |
| 11 | 11 | 0.02 | 72 |

**[Table 4]**

| Wax-based additive (wt%) | Fluorine-based additive (wt%) | GNT (wt%) | Coefficient of friction (µ) | Dust resistance (%) |
|---|---|---|---|---|
| 0 | 0 | 0 | 0.52 | 0 |
| 1 | 1 | 0.08 | 0.3 | 30 |
| 2 | 2 | 0.08 | 0.2 | 41 |
| 3 | 3 | 0.08 | 0.1 | 62 |
| 4 | 4 | 0.08 | 0.05 | 70 |
| 5 | 5 | 0.08 | 0.03 | 79 |
| 6 | 6 | 0.08 | 0.02 | 86 |
| 7 | 7 | 0.08 | 0.02 | 89 |
| 8 | 8 | 0.08 | 0.02 | 90 |
| 9 | 9 | 0.08 | 0.02 | 87 |
| 10 | 10 | 0.08 | 0.02 | 72 |

Referring to Tables 1 to 4, it was confirmed that as the contents of the wax-based additive and/or the fluorine-based additive increase, the coefficients of friction decrease and the dust resistance performance was improved. However, as the contents of the wax-based additive and/or the fluorine-based additive increase, the dust resistance performance improvement rate, relative to the addition amount, decreases and manufacturing costs increase, and thus there is a need to select an appropriate amounts thereof.

Meanwhile, it was confirmed that the coefficient of friction and dust resistance performance were further improved in the case of using both the wax-based additive and the fluorine-based additive compared to the cases using the wax-based additive or the fluorine-based additive alone. In addition, the coefficient of friction and dust resistance performance were the best in the case of using all of the wax-based additive, the fluorine-based additive, and the GNTs.

However, in the case where a sum of the contents of the wax-based additive and the fluorine-based additive exceeds 18 wt%, surface roughness increases, resulting in deterioration of dust resistance performance.

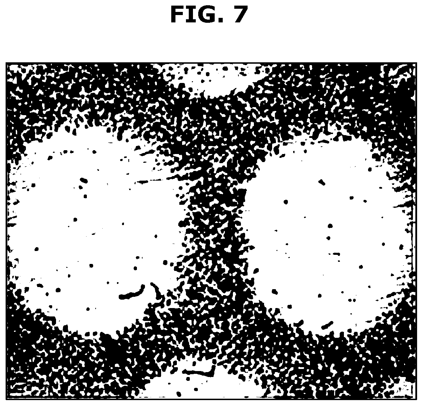

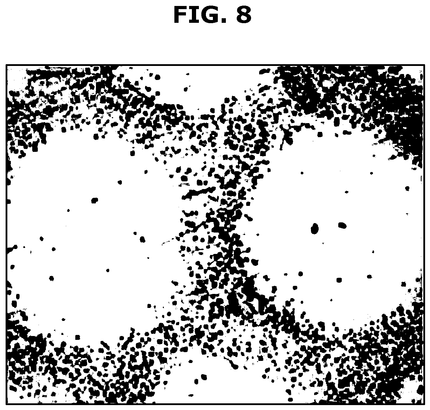

FIG. 7 is an image showing dust resistance test results of a conventional exterior material for home appliances not comprising an additive. FIG. 8 is an image showing dust resistance test results of an exterior material for home appliances according to an embodiment comprising 8 wt% of a wax-based additive and 8 wt% of a fluorine-based additive.

Referring to FIGS. 7 and 8, it was confirmed that while the conventional exterior material for home appliances has a high degree of contamination due to poor dust resistance, the exterior material for home appliances according to an embodiment has a low degree of contamination due to excellent dust resistance.

### <Correlation between GNT and transmittance>

Table 5 below shows transmittance of exterior materials according to aspect ratios of GNTs and amounts added.

The transmittance was measured at room temperature using a LS 181 transmittance tester.

**[Table 5]**

| Aspect ratio (diameter: length) | Content (wt%) | Transmittance (%) |
|---|---|---|
| 1:500 | 0.3 | 72 |
| 1:1500 | 0.09 | 80 |
| 1:2500 | 0.05 | 86 |
| 1:3500 | 0.02 | 90 |
| 1:4500 | 0.01 | 93 |
| 1:5500 | 0.006 | 96 |
| 1:6500 | 0.004 | 98 |
| 1:7500 | 0.002 | 99 |
| 1:8500 | 0.001 | 99 |

Referring to Table 5, it was confirmed that the transmittance increased as the aspect ratio of GNTs increased or as the addition amount decreased. Therefore, there is a need to control the aspect ratio at a high level and the GNT content at a low level to implement a transparent exterior material having a high transmittance.

### (Description of the signs)

1: an air conditioner 10: a main body
11: a suction port 12: a discharge port
20: a base

## Claims

1. An exterior material for a home appliance comprising:
a plastic material; and
a coating layer formed on the top of the plastic material by applying a coating solution thereto, the coating layer includes at least one additive from among a wax-based additive, a fluorine-based additive, or the wax-based additive and the fluorine-based additive by applying a coating solution having a viscosity of 10 to 100 g/cm s that includes the at least one additive.

2. The exterior material for a home appliance according to claim 1, wherein the coating solution further includes graphene nanotubes (GNTs).

3. The exterior material for a home appliance according to claim 1, wherein the wax-based additive is included in an amount of 2 to 15 wt% of the coating solution.

4. The exterior material for a home appliance according to claim 1, wherein the wax-based additive is included in a powder form having a diameter of 5 to 100 µm and has a melting point of 120°C or lower.

5. The exterior material for a home appliance according to claim 1, wherein the fluorine-based additive is included in an amount of 2 to 15 wt% of the coating solution.

6. The exterior material for a home appliance according to claim 1, wherein the fluorine-based additive is included in a powder form having a diameter of 1 to 10 µm and has a melting point of 300°C to 400°C.

7. The exterior material for a home appliance according to claim 2, wherein the coating layer includes GNTs in an amount of 0.001 to 3.0 wt% of the coating solution.

8. The exterior material for a home appliance according to claim 2, wherein the coating layer includes GNTs in an amount of 0.001 to 0.09 wt% resulting in a transmittance of 80% or more.

9. The exterior material for a home appliance according to claim 8, wherein the GNTs have an aspect ratio of 1: 1500 or more.

10. The exterior material for a home appliance according to claim 1, wherein the coating layer has an edge tilt angle with respect to the plastic material of 40 to 80 degrees.

11. The exterior material for a home appliance according to claim 1, wherein the coating layer has a coefficient of friction from 0.001 to 0.5 µ.

12. The exterior material for a home appliance according to claim 1, wherein the coating layer has a surface energy of 40 Dyne/cm or less.

13. The exterior material for a home appliance according to claim 2, wherein the coating layer has a charge mobility from 50,000 to 200,000 cm²/V s.

14. An air conditioner comprising:
a main body provided with a suction port and a discharge port;
a motor driver comprising a motor; and
a controller configured to control the motor driver,
wherein the main body includes an exterior material, the exterior material that includes:
a plastic material; and
a coating layer formed on the top of the plastic material, the coating layer includes at least one additive from among a wax-based additive, a fluorine-based additive, or the wax-based additive and the fluorine-based additive by applying a coating solution having a viscosity of 10 to 100 g/cm s that includes the additive.

15. The air conditioner according to claim 14, wherein the coating layer further includes graphene nanotubes (GNTs).
